# EUROPEAN PATENT APPLICATION

(11) **EP 4 616 925 A1**
(43) Date of publication of application: **17.09.2025**
(21) Application number: 24163614.1
(22) Date of filing: 14.03.2024
(51) Int. Cl.: B01D 45/14, B04B 5/00, B04B 5/02, B04B 5/12, B04B 7/08, F01M 11/08, F01M 13/04

(54) **A CENTRIFUGAL SEPARATOR FOR CLEANING GAS**

(71) Applicant: Alfdex AB, 261 24 Landskrona (SE)
(72) Inventor: NYBERG, Cédric, 147 63 Uttran (SE); HAGBERG, Mikael, 127 38 Skärholmen (SE)
(74) Representative: Alfa Laval Attorneys

(57) **Abstract**

The present invention provides a centrifugal separator (1) for cleaning gas containing contaminants. The centrifugal separator (1) comprises a stationary casing (2), enclosing a separation space (3) through which a gas flow is permitted, a gas inlet (20) extending through the stationary casing (2) and permitting supply of the gas to be cleaned, a rotating member (7) comprising a separation unit (16) arranged in said separation space (3) and being arranged to rotate around an axis (X) of rotation, a drive member (22) for rotating the rotating member (7); a gas outlet (28) arranged through the stationary casing (2) and configured to permit discharge of cleaned gas out from the stationary casing (2) and a drainage outlet (29) arranged in the stationary casing (2) and configured to permit discharge of liquid contaminants that have been separated from the gas out from the stationary casing (2); said drainage outlet (29) being arranged in a lower end wall (6) of the stationary casing (2). The centrifugal separator (1) further comprises a stationary structure (28) arranged within the stationary casing (2) and comprising a wake zone portion (61) arranged an axial distance from the lower end wall (6); wherein said wake zone portion (61) is arranged such that a wake zone (62) for rotating gas is formed at said wake zone portion (61) during operation of the centrifugal separator (1); and an oil bridge structure (60) axially connecting said wake zone portion (61) of the stationary structure (28) with the lower end wall (6) for guiding any contaminants from the surface of said stationary structure (28) to said lower end wall (6).

## Description

### Field of the Invention

The present invention relates to the field of centrifugal separators for cleaning a gas containing liquid contaminants. In particular, the present invention relates to a separator for cleaning crankcase gases of a combustion engine from oil particles.

### Background of the Invention

It is well known that a mixture of fluids having different densities may be separated from one another using a centrifugal separator. One specific use of such a separator is in the separation of oil from gas that is vented from a crankcase forming part of an internal combustion engine. The high-pressure gas found in the combustion chambers of an internal combustion engine to leak past the associated piston rings and into the crankcase of the engine. This continuous leaking of gas into the crankcase can lead to an undesirable increase of pressure within the crankcase and, as a consequence, to a need to vent gas from the casing. Such gas vented from the crankcase typically carries a quantity of engine oil (as droplets or a fine mist), which is picked up from the reservoir of oil held in the crankcase.

In order to allow vented gas to be introduced into the inlet system without also introducing unwanted oil (particularly into a turbocharging system wherein the efficiency of the compressor can be adversely affected by the presence of oil), it is necessary to clean the vented gas (i.e., to remove the oil carried by the gas) prior to the gas being introduced into the inlet system. This cleaning process may be undertaken by a centrifugal separator, which is mounted on or adjacent the crankcase and which directs cleaned gas to the inlet system and directs separated oil back to the crankcase. An example of such a separator is disclosed e.g., in US 8,657,908.

However, all contaminants such as oil do not always find its way to be drained out, so contaminants may become trapped within the centrifugal separator before reaching the outlet and, due to the rotating gas flow within the centrifugal separator, be carried away with the flow of clean gas.

There is thus a need in the art for an improved drainage of contaminants from a centrifugal separator.

### Summary of the Invention

It is an object of the invention to at least partly overcome one or more limitations of the prior art. In particular, it is an object to provide a centrifugal separator with an enhanced draining of contaminants such as oil from the centrifugal separator.

As a first aspect of the invention, there is provided a centrifugal separator for cleaning gas containing contaminants. The centrifugal separator is comprising
a stationary casing, enclosing a separation space through which a gas flow is permitted,
a gas inlet extending through the stationary casing and permitting supply of the gas to be cleaned,
a rotating member comprising a separation unit arranged in said separation space and being arranged to rotate around an axis (X) of rotation,
a drive member for rotating the rotating member;
a gas outlet arranged through the stationary casing and configured to permit discharge of cleaned gas out from the stationary casing,
a drainage outlet arranged in the stationary casing and configured to permit discharge of liquid contaminants that have been separated from the gas out from the stationary casing; said drainage outlet being arranged in a lower end wall of the stationary casing. The centrifugal separator further comprises
a stationary structure arranged within the stationary casing and comprising a wake zone portion arranged an axial distance from the lower end wall; wherein said wake zone portion is arranged such that a wake zone for rotating gas is formed at said wake zone portion during operation of the centrifugal separator; and
an oil bridge structure axially connecting said wake zone portion of the stationary structure with the lower end wall for guiding any contaminants from the surface of said stationary structure to said lower end wall.

As used herein, the term "axially" denotes a direction which is parallel to the rotational axis (X). Accordingly, relative terms such as "above", "upper", "top", "below", "lower", and "bottom" refer to relative positions along the rotational axis (X). Correspondingly, the term "radially" denotes a direction extending radially from the rotational axis (X). A "radially inner position" thus refers to a position closer to the rotational axis (X) compared to "a radially outer position". A radial plane is a plane having its normal parallel to the axis of rotation (X). An axial plane is a plane having its normal perpendicular to the axis of rotation (X).

The first aspect of the invention is based on the insight that contaminants, such as oil, that has been separated out from the gas may accumulate at surfaces in wake zones withing the stationary casing of the gas separator, and by forming an oil bridge from such a surface in a wake zone down towards the drainage outlet, in this case the lower end wall, enhances the cleaning efficiency. In other words, contaminants that have accumulated at a stationary surface due to the geometry in the stationary casing and the air flow are led to the drainage outlet, thereby decreasing the risk if such oil re-entering the airstream or moving along inner surfaces in the stationary casing. This facilitates draining of e.g. oil from the separator and thus increases the cleaning efficiency.

A "wake zone" is a space of disturbed or decreased airflow, usually immediately behind a stationary object present in the airflow, as seen in the direction of the airflow.

A "wake zone portion" of the stationary structure arranged within the stationary casing is thus a portion of the stationary structure at which there is a decreased or disturbed air flow during operation of the centrifugal separator. As an example, it may be at the downstream portion of the stationary structure, as seen in the direction of the air flow during use of the centrifugal separator. As an example, the wake zone portion may comprise an area that extends in a plane that forms an angle that is tilted about 60-120 degrees, such as between 70-110 degrees, such as between 80- 100 degrees, relative the direction of the rotating air flow. As an example, the wake zone portion may comprise an area in a plane that is perpendicular - i.e. tilted 90 degrees - relative the direction of the rotating air flow.

Contaminants may accumulate at this is wake zone portion when being arranged an axial distance from the inner lower end wall. Therefore, the oil bridge structure "bridges" the axial distance from the wake zone portion to the inner lower end wall, so that accumulated contaminants may be guided down to the inner lower end wall, and for there to the drainage outlet.

The contaminants in the gas may comprise liquid contaminants, such as oil, and soot. Thus, in embodiments, the contaminants comprise oil.

Consequently, the centrifugal separator may be for separating liquid contaminants, such as oil, from gas. The gas may be crankcase gas of a combustion engine. However, the centrifugal separator may also be suitable for cleaning gases from other sources, for instance the environment of machine tools which frequently contains large amounts of liquid contaminants in the form of oil droplets or oil mist.

The stationary casing of the centrifugal separator may comprise a surrounding side wall, and an upper end wall and a lower end wall, which enclose the separation space. The stationary casing may have a cylindrical shape with circular cross-section having a radius R from the axis (X) of rotation to the surrounding side wall. This radius R may be constant at least with respect to a major part of the circumference of the surrounding side wall. The stationary casing may also be slightly conical. The surrounding side wall may be divided into a lower surrounding sidewall that may be cylindrical in shape and may be joined to an upper surrounding sidewall e.g., by welding or by fastening members such as screws. This facilitates mounting of the rotating member inside the stationary casing. The lower surrounding annular sidewall may extend down to the lower end wall of the stationary casing. The lower end wall may thus be the lower wall extending in the radial direction, such as in the radial plane or with a small angle relative the radial plane. In some embodiments, also the lower end wall is part of the lower surrounding annular sidewall.

The gas inlet of the centrifugal separator may be arranged through the upper end wall or through the surrounding side wall close to the upper end wall, thus at the top of the separator, such that gas entering through the gas inlet is directed to the separation space. The downstream portion of the gas inlet may be centred around the axis of rotation (X). The gas inlet may further comprise an upstream portion in the form of an inlet conduit. This conduit may extend radially or axially from the centrifugal separator, or in any other direction therebetween. During operation, gas to be cleaned may be directed centrally through the separation unit from the gas inlet and through the separation unit radially outwards.

The rotating member is arranged for rotation during operation by means of the drive member. The rotating member comprises a separation unit arranged in the separation space. The separation unit of the rotating member may be a surface-enlarging insert, such as a stack of separation discs (a disc stack) or one or several filters, which promotes separation of contaminants from the gas.

Accordingly, in embodiments, the separation unit comprises a plurality of separation members. The separation members of the rotating member are examples of surface-enlarging inserts that promote separation of contaminants from the gas.

The separation unit may thus comprise a rotatable filter or a rotatable filter stack.

As an alternative, the plurality of separation members may be arranged as a stack of separation discs, such as a stack of frustoconical separation discs.

A frustoconical disc may have a planar portion extending in a plane that is perpendicular to the axis of rotation, and a frustoconical portion that may extend upwards or downwards. The planar portion may be closer to the rotational axis than the frustoconical portion. As an alternative, the discs of the stack may be radial discs, in which substantially the whole disc extends in a plane that is perpendicular to the axis of rotation. Such discs may have an outer radius and an inner radius, thus forming a central opening in the disc.

It is also to be understood that the separation members, such as separation discs, not necessarily have to be arranged in a stack. The separation space may for example comprise axial discs, or plates that extend around the axis of rotation. The axial discs or plates may be planar, i.e., extending in planes that are parallel to the axis of rotation. The axial discs or plates may also have a slightly or significantly curved shape, such as an arcuate or spiral shape, as seen in a radial plane.

The rotating member may be journaled within the stationary casing via at least one bearing, such as via an upper and lower bearing arranged axially above and below the separation unit, respectively. In embodiments of the first aspect, the rotating member comprises an axial shaft that is supported by the at least one bearing. The axial shaft may thus be centred at the axis of rotation (X). The separation unit may be arranged around such axial shaft.

The centrifugal separator may be configured to convey gas to be cleaned, such as crankcase gases, from the gas inlet into a central portion of the rotating member. In this manner the crankcase gases may be "pumped" from the central portion of the rotating member into the interspaces between the separation discs in the stack of separation discs by the rotation of the rotating member. Thus, the centrifugal separator may work according to the concurrent flow principle, in which the gas flows in the disc stack from a radial inner part to a radial outer part, which is opposite to a separator operating according to the counter-current flow principle, in which the gas is conducted into the separation space at the periphery and conveyed towards a central part of the separation space.

The drive member may for example comprise a turbine wheel, rotated by means of an oil jet from the lubrication oil system of the combustion engine or a free jet wheel comprising a blow-back disk. However, the drive member may also be independent of the combustion engine and comprise an electrical motor, a hydraulic motor or a pneumatic motor.

The outlet for cleaned gas (gas outlet) may be in the form of an opening or a gas outlet tube extending through a wall of the stationary casing, such as through a lower portion of the surrounding side wall of the stationary casing. The gas outlet tube may be a generally cylindrical tube or have another cross-section, such as an oval cross-section.

The drainage outlet is arranged in the lower end wall of the stationary casing, i.e. at the bottom of the separator. The drainage outlet may thus be arranged in an end wall opposite the end wall through which, or at which, the inlet is arranged. The drainage outlet of the centrifugal separator may be formed by several spot shaped through holes of the stationary casing or by a single drainage passage.

In embodiments of the first aspect, the drainage outlet is arranged centrally in the lower end wall and configured to discharge liquid contaminants.

Thus, the drainage outlet may be arranged at the axis of rotation or centred around the axis of rotation. Thus, the drainage outlet could also be arranged at some distance from the centre of the lower end wall.

The drainage outlet may be in an annular collection groove or may be formed as several through holes at the lower end wall of the stationary casing. The drainage outlet may be arranged such that contaminants, such as oil, are drained through a bearing arranged for journaling the rotating member. The drainage outlet may be formed so that oil can flow through the lower bearing, or radially outside the lower bearing, down into the turbine housing.

In embodiments of the first aspect, the lower end wall further comprises guiding members for guiding separated contaminants on the lower end wall towards the drainage outlet. This may facilitate transport of contaminants on the lower end wall towards the drainage outlet.

The guiding members may be elongated and for example be straight or curved, as seen in the radial plane.

As an example, the guiding members may comprise elongated recesses for guiding liquid contaminants to the drainage outlet. The recesses thus forms ditches in the inner surface of the lower end wall.

As an example, the recesses of the lower end wall may be arranged radially.

The recesses may be arranged from the outer periphery to the centre of the lower end wall, where the drainage outlet may be located. The recesses may be arranged to cover most of the radial distance of the lower end wall.

As opposed to recesses, the guiding members may also form protrusions from the inner surface of the lower end wall.

As an example, the lower end wall may comprise at least four guiding members, such as at least four recesses. The number could also be larger, such as at least five, six, seven, eight or ten. The area of the lower end wall would advantageously have a certain percent covered by recesses. At least four recesses would give sufficient coverage that ensures a high degree of drainage at the lower end wall.

In embodiments of the first aspect, the wake zone portion of the stationary structure is an edge portion or a corner portion. Thus, the stationary structure may comprise a planar surface having an edge or a corner in a wake zone of the centrifugal separator, and contaminants, such as oil, may have a tendency to accumulate at such edge or corner portions. Having an oil bridge from such an edge or corner portion may thus be advantageous in guiding such accumulated oil axially down to the lower end wall.

As an example, the corner portion forms a sharp corner.

In embodiments, the wake zone portion is arranged within the outer 50%, such as the outer 25%, of the radial extension of the separation space.

Thus, in embodiments of the first aspect, the oil bridge structure is arranged within the outer 50%, such as the outer 25%, of the radial extension of the separation space.

Contaminants may be more likely to gather at the radial outer portions of the separation space, which is why it may be an advantage to have arrange the oil bridge from the wake zone portion at such position.

The oil bridge structure may be a simple planar surface extending axially from the wake zone portion to the lower end wall. In embodiments of the first aspect, the oil bridge structure has a planar surface extending in the axial plane.

The stationary structure is a structure within the stationary casing that does not rotate during operation. However, rotating gas may stream around the stationary structure, thereby forming wake zones in the flow of gas. Thereby, the stationary structure may have wake zone portions, at which contaminants, such as oil, may accumulate.

Thus, in embodiments, the wake zone portion is a portion of the stationary structure that is in a downstream end of the stationary structure, as seen in the direction of the rotating gas during operation of the centrifugal separator.

In embodiments of the first aspect, the stationary structure forms part of the gas outlet.

As discussed above, the gas outlet may extend into the stationary casing, i.e. protrude from an inner wall, such as a surrounding sidewall, of the stationary casing. Thus, the gas outlet may comprise a tube or pipe that extends into the stationary casing. It has been found by the inventors that such gas outlet forms a wake zone, and thus has a wake zone portion, during operation of the centrifugal separator. Hence, it may be an advantage to connect such wake zone portion to the lower end wall with the oil bridge structure.

In embodiments of the first aspect, the stationary structure further forms part of a stationary insert that is arranged for forming a barrier between cleaned gas and separated contaminants prior to the cleaned gas and separated contaminants exiting said stationary casing.

As an example, the gas outlet may form part of such stationary insert, i.e. the gas outlet may be formed with a stationary insert as a single piece.

The stationary insert may comprise an annular wall member. The stationary insert may be arranged in the stationary housing so as to form an annular vertical channel for the separated contaminants between the inner wall of the stationary casing and the annular wall member. Part of the gas flow may also pass through this annular vertical channel.

The annular wall member may thus extend in the axial direction, such as parallel to the axis of rotation (X) or with a slight angle with the axis of rotation (X).

Moreover, the stationary insert may further comprise a central cup member with conically extending sidewalls. At least a portion of the rotating member may be arranged within such central cup member. So that the central cup member may be arranged around the axis of rotation.

As an example, the annular wall member of the stationary insert discussed above may extend downwards from the outer edge of the cup member.

In embodiments of the first aspect, the stationary insert is arranged in a lower portion of the stationary casing.

The lower portion may thus be the lower half of the stationary casing. As discussed above, the stationary casing may comprise an upper and lower surrounding annular sidewall. The stationary insert may then be arranged axially within the lower surrounding side wall such that the lower surrounding sidewall encloses the insert.

So, during operation, gas to be cleaned may be directed centrally through the separation unit from the gas inlet through the separation unit radially outward. The gas flow may continue travelling downward in the stationary casing. The gas flow may travel in a rotating motion within the stationary casing, close to the surrounding side wall and finally leave the separator through the gas outlet.

As a second aspect of the invention, there is provided a method for cleaning gas containing contaminants, the method comprising
guiding gas containing contaminants to a centrifugal separator according to the first aspect above during rotation of the rotating member,
discharging cleaned gas from the gas outlet, and
discharging contaminants via the drainage outlet.

The contaminants in the gas may comprise liquid contaminants, such as oil, and soot.

This aspect may generally present the same or corresponding advantages as the former aspects. Effects and features of the second aspect are largely analogous to those described above in connection with the first and second aspects. Embodiments mentioned in relation to the first aspect are largely compatible with the second aspect.

### Brief description of the Drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Figure 1 shows a schematic drawing of the cross-section of an embodiment of a centrifugal separator for cleaning gas.
Figure 2 shows an embodiment of the lower end wall and stationary insert of a centrifugal separator.
Figure 3 shows an embodiment of a wake zone portion.

### Detailed Description

The centrifugal separator according to the present disclosure will be further illustrated by the following description with reference to the accompanying drawings.

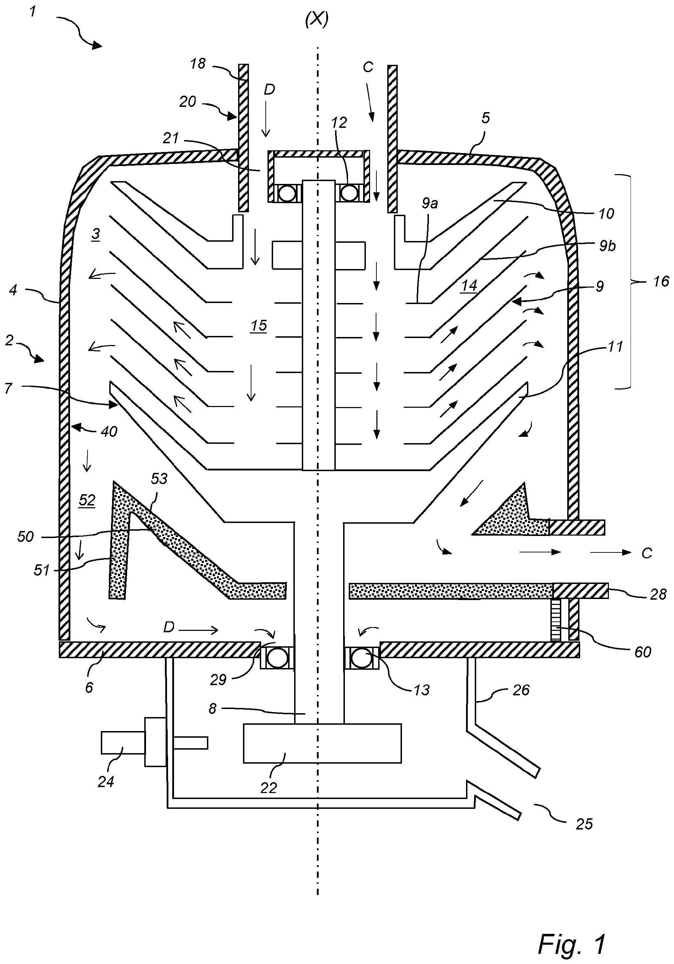

Fig. 1 shows a cross-section of a centrifugal separator 1 according to the present disclosure. The centrifugal separator 1 comprises a stationary casing 2, which is configured to be mounted to a combustion engine (not disclosed), especially a diesel engine, at a suitable position, such as on top or at the side of the combustion engine or to the engine block of the combustion engine.

The centrifugal separator 1 as disclosed herein may also be suitable for cleaning gases from other sources than combustion engines, for instance the environment of machine tools which frequently contains large amounts of liquid contaminants in the form of oil droplets or oil mist.

The stationary casing 2 encloses a separation space 3 through which a gas flow is permitted. The stationary casing 2 comprises, or is formed by, a surrounding side wall 4, an upper end wall 5 and a lower end wall 6.

The centrifugal separator 1 comprises a rotating member 7, which is arranged to rotate around an axis (X) of rotation. It should be noted that the stationary casing 2 is stationary in relation to the rotating member 7, and preferably in relation to the combustion engine to which it may be mounted.

The stationary casing 2 has a radius from the axis (X) of rotation to the surrounding side wall 4 that is constant at least with respect to a major part of the circumference of the surrounding side wall 4. The surrounding side wall 4 thus has a circular, or substantially, circular cross-section in a radial plane.

The rotating member 7 comprises a rotatable shaft, i.e., spindle 8 and a separation unit 16 attached to the spindle 8. The separation unit 16 comprises a plurality of separation members 9, which may be a stack of separation discs. All the separation discs of the stack 9 are provided between a top disc 10 and a lower end plate 11. The spindle 8, and thus the rotating member 7, is rotatably supported in the stationary casing 2 by means of an upper bearing 12 and a lower bearing 13, the bearings being arranged one on each axial side of the stack of separation discs 9. However, the bearings 12, 13 could for example both be arranged axially below or above the stack 9 of separation discs.

The separation discs of the disc stack 9 are frusto-conical and extend outwardly and upwardly from the spindle 8. The separation discs thus comprise a flat portion 9a, which extend perpendicularly to the axis of rotation (X), and a conical portion 9b, that extend outwardly and upwardly from the flat portion 9a. As an alternative, the separation discs could also extend outwardly and downwardly, or even radially.

The separation discs of the stack 9 are provided at a distance from each other by means of distance members (not disclosed) in order to form interspaces 14 between adjacent separation discs 9, i.e., an interspace 14 between each pair of adjacent separation discs 9. The axial thickness of each interspace 14 may e.g., be in the order of 0.5-2 mm, such as 1-2 mm.

The separation discs of the stack 9 may be made of plastic or metal. The number of separation discs in the stack 9 is normally higher than indicated in Fig. 1 and may be for instance 50 to 100 separation discs 9 depending on the size of the centrifugal separator 1.

The centrifugal separator 1 comprises an oil nozzle 24 arranged for being connected to an engine oil circuit of an internal combustion engine. During running of the internal combustion engine, oil is pumped through the oil nozzle 24 onto a turbine wheel 22, which is arranged in turbine housing 26. Since turbine wheel 22 is connected to the spindle 8, the rotating member 7, and thus the stack of separation discs 9, also rotate upon rotation of wheel 22. As an alternative, the centrifugal separator 1 may comprise an electric motor arranged to rotate the spindle 8 and rotating member 7. As a further alternative, the centrifugal separator 3 may comprise a turbine wheel connected to the spindle 8, where the turbine wheel is arranged to be driven by exhaust gases from the internal combustion engine to rotate the spindle 8 and the rotating member 7. The rotating member 7 may also be arranged for being rotated by a mechanical drive unit. Thus, the centrifugal separator may comprise a mechanical drive unit for rotating the rotating member 7.

The rotating member 7 defines a central space 15. The central space 15 is in this example formed by a through hole in each of the separation discs 9. In the embodiments of Fig. 1, the central space 15 is formed by a plurality of through holes, each extending through the top disc 10 and through each of the separation discs 9, but not through the lower end plate 11. The through holes are arranged in the flat portions 9a of the separation discs.

The gas inlet 20 extends through the stationary casing 2, and more precisely through upper end wall 5, and is arranged for supplying gas to be cleaned to the separation space 3. The gas inlet 20 is formed by the axially extending inlet conduit 18, which forms an upstream portion, and by through channels 21 that form a downstream portion of the inlet 20.

The through channels 21 are in fluid connection with central space 15 and are arranged radially outside the upper bearing 12. Thus, the gas inlet 20 communicates with the central space 15 so that the gas to be cleaned is conveyed from the inlet 20 via the central space 15 to the interspaces 14 of the stack of separation discs 9. The gas inlet 20 is configured to communicate with the crankcase of the combustion engine, or any other source, via the inlet conduit 18 permitting the supply of crankcase gas from the crankcase to the gas inlet 20 and further to the central space 15 and the interspaces 14 as explained above.

The centrifugal separator 1 comprises a drainage outlet 29, which is arranged in the lower portion of the stationary casing 2 and configured to permit discharge of liquid contaminants separated from the gas. The drainage outlet 29 is in this embodiment in the form of through holes arranged in the lower end wall 6 so that separated liquid contaminants flow through the lower bearing 13 as they are drained from the separation space 3 to the turbine housing 26. The separated oil, and other particles and/or substances, is led to an oil outlet 25 of the centrifugal separator 1, which together with oil from the oil nozzle 24 used to drive the wheel 22, may be led back to the engine oil circuit of an internal combustion engine. The drainage outlet 29 in this embodiment is placed centrally on the lower end wall 6. In alternative embodiments, the drainage outlet 29 may be placed elsewhere on the lower end wall 6.

The gas outlet tube 28 of the centrifugal separator 1 is arranged through the stationary casing 2 and is configured to permit discharge of cleaned gas.

During operation of the centrifugal separator as shown in Fig. 1, the rotating member 7 is kept in rotation by the oil nozzle 24 supplying oil against the wheel 22. As an example, the rotational speed may be in the range of 7.500-12.000 rpm.

Contaminated gas, e.g., crankcase gas from the crankcase of an internal combustion engine, is supplied to the gas inlet 20 via conduit 18. This gas is conducted further into the central space 15 and from there into and through the interspaces 14 between the separation discs of the stack 9. As a consequence of the rotation of the rotating member 7 the gas is brought to rotate, whereby it is pumped further on radially outwardly through gaps or interspaces 14.

During the rotation of the gas in the interspaces 14, solid or liquid particles such as oil suspended in the gas are separated therefrom. The particles settle on the insides of the conical portions 9b of the separation discs and slide or run after that radially outwardly thereon. When the particles and/or liquid drops have reached out to the radial outer edges of the separation discs of the stack 9, they are thrown away from the rotating member 7 and hit the inner surface 40 of the surrounding side wall 4. Separated oil particles may form a film on the inner surface of the stationary casing 2. From there, oil may be pulled by gravity downwardly to bottom end wall 6 and then leave the separation space 3 through the drainage outlet 29. For this purpose, the inner wall of the bottom end wall 6 may be tilted radially inwards, so that oil leaving the surrounding inner wall of the stationary casing 2 may be pulled by gravity towards drainage outlet 29. The path of the contaminants in the gas is schematically illustrated by arrows "D" in Fig. 1.

Cleaned gas freed from particles and exiting from the stack of separation discs 9 leaves the stationary casing 2 through the gas outlet tube 28. The path of the gas through the centrifugal separator 1 is schematically shown by arrows "C" in Fig. 1.

The centrifugal separator of Fig. 1 also comprises a stationary insert 50, which is arranged in a lower portion of the stationary casing 2, and more precisely axially below the stack 9 of separation discs. The stationary insert 50 may be fastened to the surrounding side wall 4 of the stationary casing, and or/ to lower end wall 6 via supporting legs (not shown). The stationary insert 50 comprises an outer annular wall member 51 and a central frustoconical cup member 53 with conically extending sidewalls. The lower part of the end plate 11 is arranged within the central cup member 53. The annular wall member 51 extends axially downwards from the outer edge of the cup member 53.

The stationary insert 50 forms a physical barrier between cleaned gas and separated contaminants prior to the cleaned gas and separated contaminants exit the stationary casing 2. For this purpose, the stationary insert 50 is arranged in the stationary housing 2 so as to form an annular vertical channel 52 for the separated contaminants between the inner surface 40 of the stationary casing 2 and the annular wall member 51 and a flow path for clean gas within the central cup member 53 towards the gas outlet 28. Thus, the annular vertical channel 52 may form an annular slit and, during use of the separator 1, may collect separated oil droplets that run downwards on the inner surface 40 of the surrounding side wall 4 under the action of gravity. Also, the action of a downwards spiralling gas flow may force the oil on the inner surface 40 downwards. The annular vertical channel 52 thus shields the separated liquid particles flowing down on inner wall 40 from the rotating gas, so as to decrease the risk of separated oil being pulled from the inner wall 40 on its way down to drainage outlet 29. The stationary insert 50 may be a moulded unit, preferably of a polymer or a plastic material.

As an alternative, the annular wall member 51 could also be left out, so that the stationary insert 50 is mainly defined by the conical cup member which could be sufficient to direct the gas flow in connection to the gas outlet.

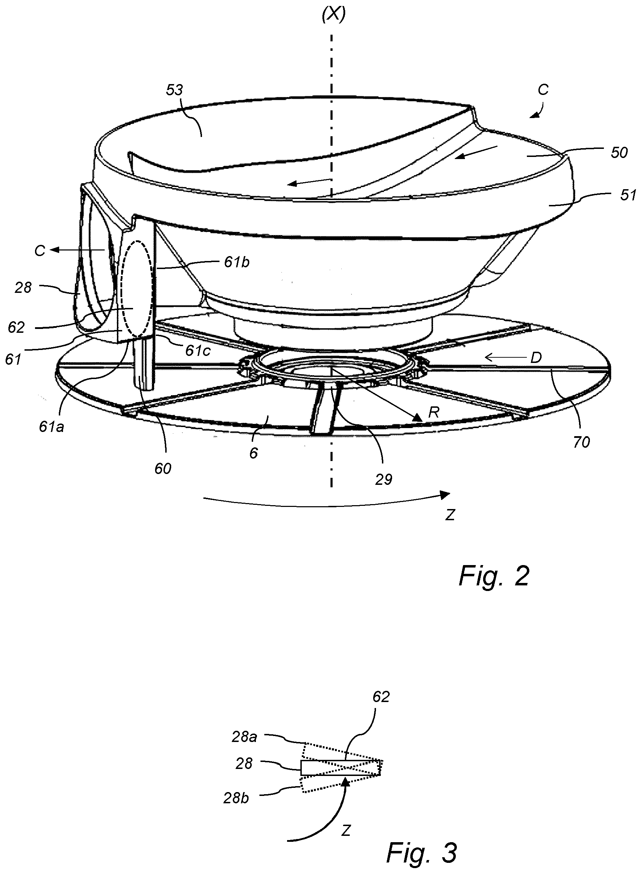

Fig. 2 shows a perspective view of the lower end wall 6 of the centrifugal separator 1 as well as the stationary insert 50. As discussed in relation to Fig. 1 above, clean gas is directed via the stationary insert 50 to and through the gas outlet 28, as illustrated by arrows "C" in Fig. 2. In this example, the gas outlet 28 is arranged as a tube that extends through the stationary casing 2 and formed as a single piece together with the stationary insert 50. However, the gas outlet 28 may as an alternative be in the form of a piece that is separate from the stationary insert 50. In addition to clean gas being directed and lead out through the gas outlet 28, gas within the stationary casing 2 is flowing down in a spiralling movement during rotation of the rotating member. In Fig. 2, the rotational direction of the rotating member, and hence the gas, is illustrated by arrow "Z". Hence, when reaching the lower part of the stationary casing 2, the gas flow circulates in the cavity that is formed between the stationary insert 50 and the lower end wall 50. Due to the stationary structures that are present in this cavity, a wake zone 62 may be formed during operation at a wake zone portion 61 of the stationary structure. In such a wake zone 62, the flow of gas is substantially lower. In other words, the wake zone portion 61 is sheltered from the wind. In this example, the wake zone portion 61 is a downstream or leeward portion of the stationary gas outlet 28 as seen in the direction Z of the rotating gas flow. The wake zone portion 61 is further arranged at an axial distance above the lower end wall 6.

The inventors have found that contaminants such as oil tend to accumulate at such wake zone portions 61. Accumulations of contaminants may lead to contaminants being dragged into the rotating gas flow and thus risk re-entering the clean gas, thereby leading to a decreased cleaning efficiency of the centrifugal separator 1. Therefore, according to the present invention, there is provided an oil bridge structure 60 that is axially connecting the wake zone portion 61- in this case a leeward portion of the tube forming at least part of gas outlet 2 in the stationary casing the - with the lower end wall 6. Hence, the wake zone portion 61 is a portion of the stationary gas outlet 28 that is in a downstream end of the gas outlet 28, as seen in the direction Z of the rotating gas during operation of the centrifugal separator 1.

With such as arrangement, any contaminants that accumulate at the wake zone portion 61 an axial distance above lower end wall 6 may be guided from the surface of the gas outlet 28 via the oil bridge structure 60, to the lower end wall 6 and thereafter towards the drainage outlet 28.

As illustrated in Fig. 2, the oil bridge structure 60 is attached to the wake zone portion 61 at the corner 61c, that is formed by edge portions 61a and 61b.

The oil bridge structure 60 may be an integrated portion of the gas outlet 28 or may be formed as a separate unit that is affixed between the gas outlet 28 and the lower end wall 6.

Since liquid contaminants are more likely to be found near the outer radius of the separation space, the oil bridge 60 is preferably arranged within the outer radial portion of the radial extension R of the separation space 3. As an example, the wake zone portion 61to which the oil bridge structure 60 connects is arranged within the outer 25% of the radial extension R of the separation space 3.

Furthermore, the oil bridge structure 60 may have at least one planar surface extending in the axial plane. This may facilitate drainage of oil from the wake zone portion 61 to the lower end wall 6.

To further facilitate transport of the liquid contaminants on the lower end wall to the drainage outlet 29, the lower end wall 6 further comprises guiding members in the form of elongated recesses 70 formed in the surface of the lower end wall 6 for guiding separated contaminants on the lower end wall 6 towards the drainage outlet 29.

The recesses 70 are preferably radially arranged and covering most of the radial distance of the lower end wall 6. Each recess 6a is arranged in the lower end wall 6 from a radially inner position at the drainage outlet 29 to a radially outer position that is a short distance away from, or at, the perimeter of the lower end wall 6. In this example, there are eight straight radial recesses 70 evenly distributed on the lower end wall around the drainage outlet 29.

Fig. 3 shows a section view from above of a further embodiment of a wake zone portion 28 within the stationary casing 4. Also shown is the rotational direction z of the rotating member 7, which is also the rotational direction of the rotating gas flow. The wake zone portion 28 is in this embodiment arranged in a plane that is perpendicular to the rotational direction of the gas flow z, and therefore a wake zone 62 is formed downstream of the wake zone portion. However, as indicated by dotted portions 28a and 28b, the wake zone portion could also be arranged in a plane that forms an angle with the direction of the rotating gas flow that deviates from 90 degrees (perpendicular), such as between 60 and 120 degrees, such as between 70 and 110 degrees.

The invention is not limited to the embodiment disclosed but may be varied and modified within the scope of the claims set out below. The invention is not limited to the orientation of the axis of rotation (X) disclosed in the figures. The term "centrifugal separator" also comprises centrifugal separators with a substantially horizontally oriented axis of rotation. In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A centrifugal separator (1) for cleaning gas containing contaminants, said centrifugal separator (1) comprising
a stationary casing (2), enclosing a separation space (3) through which a gas flow is permitted;
a gas inlet (20) extending through the stationary casing (2) and permitting supply of the gas to be cleaned;
a rotating member (7) comprising a separation unit (16) arranged in said separation space (3) and being arranged to rotate around an axis (X) of rotation;
a drive member (22) for rotating the rotating member (7);
a gas outlet (28) arranged through the stationary casing (2) and configured to permit discharge of cleaned gas out from the stationary casing (2); and
a drainage outlet (29) arranged in the stationary casing (2) and configured to permit discharge of liquid contaminants that have been separated from the gas out from the stationary casing (2); said drainage outlet (29) being arranged in a lower end wall (6) of the stationary casing (2);
wherein the centrifugal separator (1) further comprises
a stationary structure (28) arranged within the stationary casing (2) and comprising a wake zone portion (61) arranged an axial distance from the lower end wall (6); wherein said wake zone portion (61) is arranged such that a wake zone (62) for rotating gas is formed at said wake zone portion (61) during operation of the centrifugal separator (1); and
an oil bridge structure (60) axially connecting said wake zone portion (61) of the stationary structure (28) with the lower end wall (6) for guiding any contaminants from the surface of said stationary structure (28) to said lower end wall (6).

2. A centrifugal separator (1) according to claim 1, wherein said wake zone portion (61) of the stationary structure is an edge portion (61a, 61b) or a corner portion (61c).

3. A centrifugal separator (1)according to any previous claim, wherein the wake zone portion (61) is a portion of the stationary structure (28) that is in a downstream end of the stationary structure (28), as seen in the direction (Z) of the rotating gas during operation of the centrifugal separator (1).

4. A centrifugal separator (1) according to any previous claim, wherein the oil bridge structure (60) is arranged within the outer 50% of the radial extension (R) of the separation space (3).

5. A centrifugal separator (1) according to any previous claim, wherein said oil bridge structure (60) has a planar surface extending in the axial plane.

6. A centrifugal separator (1) according to any previous claim, wherein said stationary structure (28) forms part of said gas outlet.

7. A centrifugal separator (1) according to any previous claim, wherein said stationary structure (28) further forms part of a stationary insert (50) that is arranged for forming a barrier between cleaned gas and separated contaminants prior to the cleaned gas and separated contaminants exiting said stationary casing (2).

8. A centrifugal separator (1) according to any previous claim, wherein the lower end wall (6) further comprises guiding members (70) for guiding separated contaminants on the lower end wall (6) towards the drainage outlet (29).

9. A centrifugal separator (1) according to any previous claim, wherein the guiding members (70) comprises elongated recesses for guiding liquid contaminants to the drainage outlet (29).

10. A centrifugal separator (1) according to claim 9, wherein the recesses (70) of the lower end wall (6) are arranged radially.

11. A centrifugal separator (1) according to claim 9 or 10, wherein the lower end wall (6) comprises at least four recesses (70).

12. A centrifugal separator (1) according to any previous claim, wherein said separation unit (16) comprises a plurality of separation members (9).

13. A centrifugal separator (1) according to claim 12, wherein said plurality of separation members (9) is arranged as a stack of frustoconical separation discs (9).

14. A centrifugal separator (1) according to any previous claim, wherein the contaminants comprise oil.
